Europäisches Patentamt

(19) **European Patent Office**

**Office européen des brevets**

(11) Numéro de publication: **0 125 961**
**A1**

## (12) DEMANDE DE BREVET EUROPEEN

(21) Numéro de dépôt: **84400794.8**

(22) Date de dépôt: **19.04.84**

(51) Int. Cl.³: **H 02 K 23/18**

(30) Priorité: **20.04.83 FR 8306460**

(43) Date de publication de la demande:
**21.11.84 Bulletin 84/47**

(84) Etats contractants désignés:
**BE CH DE FR GB IT LI SE**

(71) Demandeur: **Black & Decker Inc.**
**Drummond Plaza Office Park 1423 Kirkwood Highway**
**Newark Delaware 19711(US)**

(72) Inventeur: **Duverger, Jean**
**Saint Pierre de Bressieuse**
**F-38870 Saint Simeon de Bressieuse(FR)**

(74) Mandataire: **Martin, Jean-Jacques et al,**
**Cabinet REGIMBEAU 26, Avenue Kléber**
**F-75116 Paris(FR)**

(54) **Moteur électrique à double sens de rotation.**

(57) La présente invention concerne un moteur électrique du type dit "universel" à courant alternatif ou du type à courant continu.

Le stator porte deux paires de balais (12, 13, 15, 16), associées respectivement à l'un et l'autre des sens de rotation (19, 20) du rotor; les positions moyennes respectives (14, 17) des deux paires sont fixes par rapport au stator, optimisées en fonction de l'un respectif des sens de rotation (19, 20), et décalées angulairement; il est prévu des moyens sélectifs (39, 40, 41, 42, 47) d'application radiale des balais de l'une oi l'autre paire, exclusivement, contre la périphérie extérieure (8) du collecteur (7) en fonction du sens de rotation (19, 20) choisi.

Application à la réalisation de moteurs présentant les mêmes caractéristiques de fonctionnement dans un sens et dans l'autre.

FIG. 2

EP 0 125 961 A1

MOTEUR ELECTRIQUE A DOUBLE SENS DE ROTATION.

La présente invention concerne un moteur électrique du type dit "universel" à courant alternatif ou du type à courant continu.

On sait que de tels moteurs se caractérisent par une aptitude du rotor à tourner par rapport au stator, autour d'un axe déterminé, dans un sens ou dans l'autre en fonction d'un choix dans le mode d'alimentation du moteur en électricité.

Il est connu que le positionnement des balais que le stator porte au contact d'un collecteur du rotor en vue de l'alimentation des enroulements de ce dernier en électricité est problématique dans de tels moteurs ; en effet, on sait d'une part qu'il est préférable de placer les balais, respectivement de part et d'autre du collecteur, selon un plan axial coïncidant avec le neutre électrique du champ généré par le stator, et d'autre part que ce plan est décalé par rapport au plan axial correspondant au neutre mécanique du stator, respectivement dans un sens ou dans l'autre selon le sens de rotation.

De ce fait, il est apparu que le positionnement fixe, par rapport au stator, de la paire traditionnelle de balais ne pouvait donner satisfaction lorsque l'on désirait exploiter effectivement la possibilité de rotation du moteur dans les deux sens, l'optimisation de la position en vue de la rotation dans un sens entraînant lors de la rotation dans l'autre sens un rendement médiocre, et l'apparition d'étincelles électriques entre les balais et le collecteur, avec pour résultat une usure rapide des balais et du collecteur, et la production de parasites électriques dans le réseau d'alimentation en électricité.

C'est pourquoi on a proposé, par exemple dans les brevets aux Etats Unis d'Amérique n° 2 764 705 et 3 440 465, de rendre la paire de balais traditionnelle déplaçable à volonté par rapport au stator, entre deux positions limites correspondant aux positions respectives du plan axial de neutre électrique lors de la rotation respectivement dans un sens et dans l'autre.

Cette solution permet effectivement d'optimiser le positionnement des balais en fonction du sens de rotation, mais elle impose la présence d'un circuit électrique complexe pour l'alimentation des balais, car il est nécessaire de n'autoriser le changement de position des balais qu'après leur déconnexion, et de coupler à ce changement l'inversion du branchement des balais.

En outre, on remarque de façon générale que les balais s'usent différemment selon que le rotor tourne dans un sens ou dans l'autre par rapport au stator, et cette solution conduit à faire travailler les balais dans des conditions mécaniques défavorables au moins au début de chaque phase de travail suivant une inversion de sens de rotation.

Le but de la présente invention est de proposer une autre solution qui permette elle aussi de disposer de balais positionnés de façon optimale aussi bien lors de la rotation dans un sens que lors de la rotation dans l'autre sens, pour fournir un rendement maximal et éliminer l'étincelage au collecteur et ses conséquences, et qui en outre, s'accomode de branchements électriques et de sécurités mécaniques simples.

A cet effet, la présente invention propose un moteur électrique du type dit "universel" à courant alternatif ou du type à courant continu, comportant de façon connue en soi un stator et un rotor apte à tourner par rapport au stator autour d'un axe déterminé, dans un sens ou dans l'autre en fonction d'un choix dans le mode d'alimentation du moteur en électricité , le rotor portant de façon solidaire un collecteur électrique présentant une périphérie extérieure cylindrique de révolution autour de l'axe et le stator portant des balais occupant une même position moyenne diamétrale, angulairement fixe par rapport au stator, respectivement de part et d'autre du collecteur, ce moteur étant caractérisé en ce que le stator porte deux paires de balais, en ce que les positions moyennes diamétrales respectives des deux paires sont fixes par rapport au stator, optimisées en fonction de l'un respectif desdits sens de rotation, et décalées angulairement, et en ce qu'il est prévu des moyens sélectifs d'application radiale des balais de l'une ou l'autre paire, exclusivement, contre la périphérie extérieure du collecteur en fonction dudit choix.

En d'autres termes, selon l'invention, lorsque les balais de l'une des paires sont appliqués contre la périphérie extérieure du collecteur, les balais de l'autre paire sont hors de contact avec cette périphérie extérieure ; de ce fait, non seulement il n'est pas nécessaire de prévoir une quelconque inversion dans le branchement des balais puisque chaque paire est utilisée pour la rotation dans un sens spécifique, mais encore il n'est pas nécessaire de prévoir une déconnexion électrique des balais qui ne sont pas utilisés lors de la rotation dans un sens déterminé ; il en résulte la possibilité d'une grande simplicité dans les circuits de raccordement des balais au réseau d'alimentation en électricité, ainsi que des dispositifs mécaniques de sécurité qui peuvent leur être associés.

En outre, chaque paire de balais étant associée exclusivement à un sens de rotation respectif, l'usure dissymétrique des balais liée à un fonctionnement selon un sens de rotation déterminé est sans inconvénient.

Bien que conciliant ainsi les impératifs a priori divergents d'optimisation du positionnement des balais en fonction du sens désiré de rotation du rotor par rapport au stator et de simplicité des raccordements électriques, la solution préconisée selon l'invention n'implique pas pour autant le recours à des solutions mécaniques compliquées puisque, de façon particulièrement simple et économique, on peut prévoir un mode de réalisation pratique selon lequel le stator porte des moyens de guidage en déplacement radial, respectivement de part et d'autre du collecteur dans chacune desdites positions moyennes diamétrales, pour les balais de la paire de balais correspondante, il est prévu des moyens de sollicitation élastique de chaque balai dans le sens d'un déplacement radial vers le collecteur, et les moyens sélectifs d'application radiale des balais de l'une ou l'autre paire, exclusivement, contre la périphérie extérieure du collecteur en fonction du choix du sens de rotation comportent d'une part un ergot respectif solidaire de chaque balai et orienté parallèlement à l'axe, et d'autre part, sur le stator, une came guidée à la rotation par rapport à lui autour de l'axe et juxtaposée aux balais, suivant l'axe, du côté des ergots de ces derniers, cette came présentant un contour extérieur symétrique par rapport à l'axe et dont la forme dans un plan perpendiculaire à ce dernier approche celle d'un 8, définie par deux rétrécissements diamétralement opposés et deux élargissements diamétralement opposés de ce contour, disposés et dimensionnés de telle sorte que lorsque lesdits élargissements sont placés selon l'une desdites positions moyennes diamétrales, ils agissent sur les ergots des balais de la paire de balais correspondante dans le sens d'un écartement de ces derniers vis-à-vis de la périphérie extérieure du collecteur, et que les rétrécissements soient alors placés selon l'autre desdites positions moyennes diamétrales et libèrent les ergots des balais de la paire de balais correspondante dans le sens d'un contact de ces derniers vis-à-vis de la périphérie extérieure du collecteur.

Avantageusement, la forme du contour de la came est telle qu'elle limite l'usure maximale des balais en limitant la course des ergots vers le collecteur ; ainsi peut être évitée une usure totale des balais, qui risquerait d'avoir pour résultat la venue accidentelle des moyens de sollicitation élastique des balais, en général constitués par des ressorts, en contact avec le collecteur ; cette caractéristique satisfait ainsi en outre la norme américaine UL 45 Ø 11.3.

A titre de sécurité, selon un mode de mise en oeuvre préféré, deux plaquettes isolantes couplées aux moyens sélectifs d'application radiale des balais de l'une ou l'autre paire contre la périphérie extérieure du collecteur s'intercalent entre cette périphérie et, respectivement, les deux balais qui ne sont pas appliqués contre cette dernière par les moyens sélectifs ; lorsque ces derniers sont réalisés pratiquement de la forme décrite ci-dessus, les plaquettes sont avantageusement portées de façon solidaire par la came ; notamment lorsque les plaquettes sont dimensionnées et couplées aux moyens sélectifs d'application radiale des balais de l'une ou l'autre paire contre la périphérie extérieure du collecteur de telle sorte que, lors du passage d'un premier au deuxième des sens de rotation du rotor par rapport au stator, elles s'intercalent entre la périphérie extérieure du collecteur et les balais de la paire correspondant au premier sens, quittant le contact avec ladite périphérie, avant d'avoir totalement dégagé cette périphérie en regard des balais de l'autre paire, on obtient ainsi une grande sécurité électrique du montage.

En effet, à supposer que le couplage entre l'un des balais et les moyens sélectifs d'application radiale des balais de l'une ou l'autre paire contre la périphérie extérieure du collecteur cesse accidentellement, par exemple par rupture de l'ergot correspondant si l'on se réfère au mode de réalisation pratique évoqué plus haut, le balai concerné est :

- soit en contact avec le collecteur, c'est-à-dire en position de fonctionnement ; le couplage entre eux étant interrompu, les moyens sélectifs ne peuvent détacher le balai du collecteur lors de leur actionnement en fonction du changement désiré de sens de rotation, et ce changement ne peut se faire dans la mesure où l'une des plaquettes vient buter contre le balai avant d'avoir dégagé le balai qu'elle séparait précédemment du collecteur et dont le changement de sens de rotation nécessiterait la mise en contact avec ce collecteur ; la manoeuvre d'inversion devient impossible ;

- soit en position éloignée de la périphérie extérieure du collecteur et séparé de celle-ci par une plaquette ;
dans ce cas, le balai vient au contact de la plaquette et demeure
séparé de la périphérie du collecteur, sans incident électrique ;
au cours de la manoeuvre d'inversion, il est libéré après éloignement des balais de l'autre paire vis-à-vis de la périphérie
extérieure du collecteur et intercalation des plaquettes entre
cette périphérie et les balais ainsi éloignés, et l'inversion
peut effectivement avoir lieu sans incident électrique ;
par contre, une nouvelle manoeuvre d'inversion ramène au cas précédent, et est impossible.

On notera que si la présente invention est plus particulièrement tournée vers les moteurs électriques dont le sens
de rotation peut être inversé à volonté par l'utilisateur, l'inversion s'effectuant par manoeuvre des moyens sélectifs d'application radiale des balais de l'une ou l'autre paire contre la
périphérie extérieure du collecteur, elle peut également trouver
son application dans des moteurs dont le sens de rotation à
l'utilisation est unique ; en effet, elle permet alors de standardiser les bobinages de moteur de même configuration géométrique
suivant un même schéma et avec les mêmes caractéristiques, que
le moteur soit destiné à tourner dans un sens ou dans l'autre
exclusivement, ou à volonté dans les deux sens, et ainsi de
réaliser des économies de production par réduction de matières
premières (bobinage de l'inducteur) et des temps de fabrication
(bobinage et changement de série) ; lorsque le moteur est destiné
à un sens de rotation unique, la paire de balais correspondant
à l'autre sens de rotation peut être omise et les moyens sélectifs
d'application radiale des balais de l'une ou l'autre paire contre
la périphérie extérieure du collecteur peuvent être rendus inactifs,
et par exemple rendus inaccessibles à l'utilisateur ou impropres à une manoeuvre d'inversion de sens de rotation.

D'autres caractéristiques et avantages de l'invention ressortiront de la description ci-dessous, relative à un mode de réalisation non limitatif, ainsi que des dessins annexés qui font partie intégrante de cette description.

La figure 1 montre, en une vue éclatée, les différents éléments de mise en oeuvre de l'invention sur un moteur électrique à double sens de rotation, par ailleurs conventionnel .

La figure 2 montre une vue du moteur à l'état monté, en coupe selon un plan repéré en II-II à la figure 3, perpendiculaire à l'axe de rotation du rotor par rapport au stator ; l'état du moteur illustré à cette figure correspond à une rotation relative dans un premier sens déterminé.

La figure 3 montre une vue de la zone du moteur visible à la figure 2, en coupe par les deux demi-plans axiaux repérés en III-III à la figure 2.

Les figures 4 à 9 illustrent, en une vue analogue à celle de la figure 2 mais plus schématique, différents états intermédiaires aboutissant à la possibilité de rotation en sens inverse, dans l'état illustré à la figure 9.

Les figures 10 et 11 montrent, en des vues analogues à celles des figures 4 à 9, comment est évitée une mise en contact accidentelle simultanée, avec le collecteur, des balais correspondant  respectivement à l'un et l'autre sens de rotation.

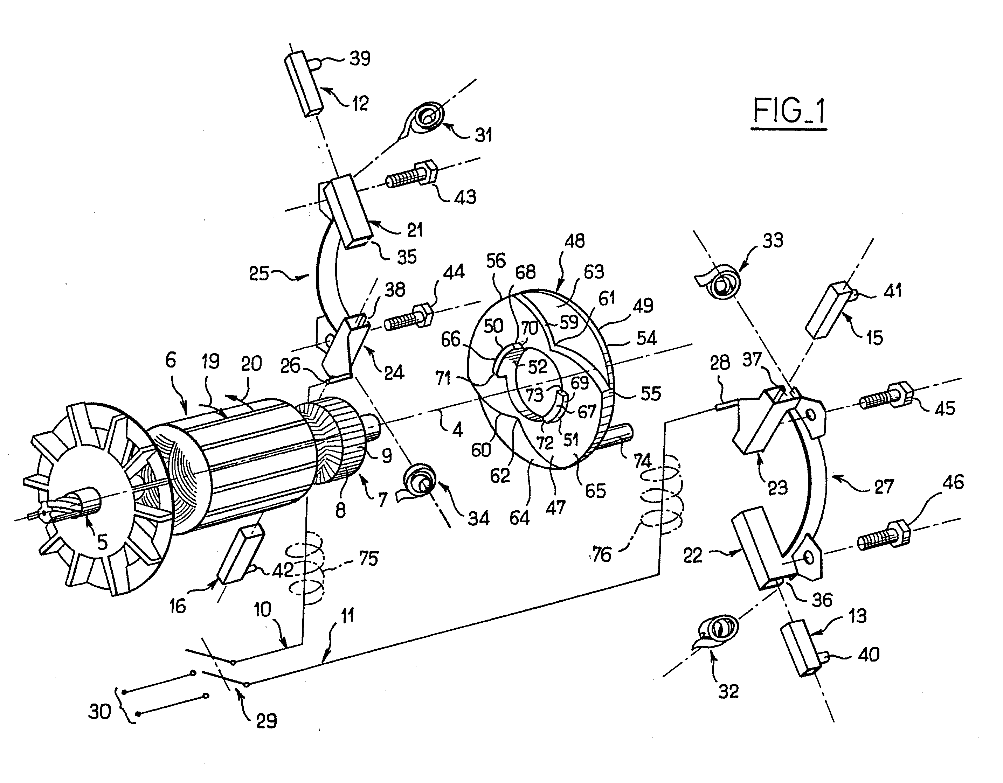

La structure propre à la mise en oeuvre de l'invention sera d'abord décrite en référence aux figures 1 à 3.

Sur ces figures, on a désigné par 1 le carter du moteur, lequel carter servira de référence lorsqu'il sera fait par la suite allusion à la fixité de certains éléments du moteur ; de façon connue en soi, ce carter 1 porte d'une part un stator fixe 2, de type conventionnel, et d'autre part des paliers tels que 3, définissant un axe fixe 4 de rotation, par rapport au carter 1 et aux éléments qu'il porte, et notamment par rapport au stator 2, pour un arbre 5 portant de façon solidaire un rotor conventionnel 6 et un collecteur également conventionnel 7, destiné à l'alimentation de ce dernier en électricité ; de façon connue en soi, le collecteur 7 présente une face périphérique extérieure 8 cylindrique de révolution autour de l'axe 4, et définie par la juxtaposition de lames conductrices 9 orientées parallèlement à l'axe 4 et isolées électriquement les unes par rapport aux autres ; un tel type de collecteur est connu de l'homme du métier, et ne nécessite de ce fait pas une description plus détaillée.

L'alimentation des lames 9 du collecteur 7 en électricité à partir de deux fils connecteurs 10, 11 portés de façon fixe ou pratiquement fixe par le carter 1 est assurée par des balais également portés par ce dernier et qui, conformément à l'invention, sont mis sélectivement au contact de la face 8 du collecteur 7, selon le sens dans lequel on désire que le rotor 6 tourne par rapport au stator 2 autour de l'axe 4.

A cet effet, il est prévu conformément à la présente invention deux paires de balais, les deux balais 12, 13 d'une première paire étant disposés selon un même axe moyen 14 coupant l'axe 4 à angle droit dans la zone du collecteur 7, de part et d'autre duquel sont respectivement placés les deux balais 12, 13 ; de même, les deux balais 15, 16 de la deuxième paire sont disposés selon un même axe moyen 17 coupant l'axe 4 à angle droit par exemple au même point que l'axe 14 et en tout cas dans la zone du collecteur 8, de part et d'autre duquel sont placés respectivement le balai 15 et le balai 16.

Les balais 12, 13, 15, 16 peuvent être de tout type connu en soi, et se présentent dans l'exemple illustré sous la forme de bâtors d'un matériau conducteur tel que du graphite ou un métal fritté, présentant transversalement par rapport à l'axe moyen respectif 13 ou 17 une section rectangulaire constante.

Conformément à l'invention, les deux axes moyens 14 et 17 des balais sont fixes par rapport au carter 1, et décalés angulairement, en référence à l'axe 4, par rapport à un plan 18 incluant l'axe 4 et correspondant au neutre mécanique du stator, lequel plan 18 est fixe par rapport au carter 1, de façon à optimiser ainsi la position de l'axe moyen 14 des balais 12 et 13 en fonction d'une utilisation de ces derniers en vue de la rotation du rotor 6 dans un premier sens 19 par rapport au stator 2 et au carter 1, et la position de l'axe moyen 17 des balais 15 et 16 en fonction d'une utilisation de ces derniers en vue de la rotation relative dans un deuxième sens 20, inverse du premier.

L'homme du métier sait qu'à cet effet, il convient de placer l'axe moyen 14 des balais 12 et 13 selon un plan incluant l'axe 4 et correspondant au neutre électrique du champ généré par le stator 2 lors de la rotation du rotor 6 dans le sens 19, et l'axe moyen 17 des balais 15 et 16 selon un plan incluant l'axe 4 et coïncidant avec le neutre électrique du champ généré par le stator 2 lors de la rotation du rotor 6 dans le sens 20.

On sait que, généralement, le plan axial correspondant au neutre électrique, pour un sens de rotation donné du rotor par rapport au stator, est placé de 10 à 40° environ en amont du plan correspondant au neutre mécanique, si l'on se réfère à ce sens de rotation.

On a obtenu de bons résultats aux essais en plaçant les axes moyens 14 et 17 dans des positions symétriques l'une de l'autre par rapport au plan 18, avec un décalage angulaire entre ces deux axes moyens, ramené à l'axe 4 et par conséquent également réparti de part et d'autre du plan 18, de l'ordre de 60° environ ; naturellement, ces chiffres sont indiqués à titre d'exemple non limitatif, et l'on pourrait adopter d'autres valeurs sans sortir pour autant du cadre de l'invention ; l'axe moyen de la paire de balais correspondant à la rotation du rotor dans un sens déterminé par rapport au stator resterait cependant décalé de moins de 90° par rapport au plan 18, en amont de celui-ci en référence au sens de rotation respectif.

Pour fixer les axes moyens 14 et 17 par rapport au carter 1 en autorisant cependant une translation des balais 12 et 13 et des balais 16 et 17 respectivement selon le premier et selon le second de ces axes, il est prévu des glissières respectives 21, 22, 23, 24, de forme tubulaire, dont les deux premières sont disposées respectivement de part et d'autre du collecteur 7 suivant l'axe moyen 14, perpendiculairement auquel elles présentent une section transversale intérieure complémentaire de la section transversale respective des balais 12 et 13, et dont les deux autres sont disposées respectivement de part et d'autre du collecteur 7 suivant l'axe moyen 17, perpendiculairement auquel elles présentent une section transversale intérieure complémentaire de la section transversale des balais 15 et 17 respectivement.

Avantageusement, comme il ressort de la figure 1, les glissières 21 et 24 correspondant aux deux balais 12 et 16 situés d'un même côté du plan 18 sont réalisées à partir d'une même pièce 25 d'un matériau conducteur de l'électricité, et par exemple de métal, solidarisée avec le carter 1 par exemple par vissage en 43 et 44 et munie d'une borne 26 à laquelle aboutit une extrémité du fil connecteur 10 ; de même, les glissières 22 et 23 sont constituées par deux zones d'une même pièce 27 en matériau conducteur de l'électricité, solidarisée avec le carter 1 par exemple par vissage en 45 et 46 et présentant une borne 28 à laquelle se raccorde une extrémité de l'autre fil connecteur 11 ; les deux connecteurs 10, 11 aboutissent par ailleurs à un interrupteur électrique 29 porté par le carter 1, et qui permet à volonté de raccorder les fils connecteurs 10, 11 au réseau d'alimentation en électricité 30, ou au contraire d'interrompre cette liaison ; dans le cas d'un moteur à courant alternatif du type dit "universel", entre l'interrupteur 29 et, respectivement, les bornes 26 et 28 sont intercalés, en série dans les fils connecteurs 10, 11, les bobinages 75 et 76 du stator 2 comme il est schématisé en trait mixte à la figure 1, alors que les bornes 26 et 28 sont raccordées directement à l'interrupteur 29 dans le cas d'un moteur à courant continu, dont le stator est constitué par un aimant permanent et par conséquent démuni de tels enroulements, comme il apparaît en trait plein à la figure 1.

On notera que, dès lors que l'interrupteur 29 est fermé, tous les balais 12, 13, 15, 16 sont alimentés en électricité via la glissière correspondante, par contact avec celle-ci.

Comme il est connu en soi, chacune des glissières 21, 22, 23, 24 comporte des moyens de sollicitation élastique du balai correspondant, respectivement 12, 13, 15, 16, au coulissement le long de l'axe moyen respectif 14 ou 17 dans le sens d'un rapprochement vis-à-vis de l'axe 4, c'est-à-dire d'un contact vis-à-vis de la face périphérique extérieure 8 du collecteur 7.

A cet effet est prévu à l'extrémité de chacune des glissières la plus éloignée de l'axe 4 un ressort en spirale, respectivement 31, 32, 33, 34, dont une première extrémité est solidarisée avec la pièce 25 ou 27 définissant la glissière respective, par exemple par conjugaison de forme, et dont l'autre extrémité s'introduit à l'intérieur de cette glissière pour s'appuyer sur l'extrémité du balai correspondant tournée dans le sens d'un éloignement vis-à-vis de l'axe 4.

Afin d'éviter que cette sollicitation élastique appliquée à chacun des balais se traduise par un contact permanent de ces derniers avec la face périphérique 8 du collecteur 7, sont prévus des moyens qui vont être décrits à présent.

Comme on le remarque notamment sur la figure 1, chacune des glissières 21, 22, 23, 24 présente, de son côté tourné dans le sens d'un éloignement par rapport au stator 2 suivant la direction de l'axe 4, une fente respective 35, 36, 37, 38 s'étendant radialement par rapport à l'axe 4 sur toute la longueur de cette glissière pour autoriser le passage d'un ergot, respectivement 39, 40, 41, 42, que porte de façon solidaire le balai correspondant, respectivement 12, 13, 15, 16 ; cet ergot 39, 40, 41, 42 forme ainsi une saillie hors de la glissière correspondante, respectivement 21, 22, 23, 24, 25, via la fente de celle-ci, parallèlement à l'axe 4 dans le sens d'un éloignement par rapport au stator 2 sans toutefois entraver la possibilité de coulissement du balai dans la glissière correspondante, suivant l'axe moyen de celle-ci.

Les ergots 39, 40, 41, 42 peuvent ainsi coopérer, à l'extérieur des glissières 21, 22, 23, 24, avec une came 47 guidée à la rotation autour de l'axe 4 par rapport au carter 1 sans possibilité de déplacement relatif suivant l'axe 4, cette came étant juxtaposée aux glissières 21, 22, 23, 24 de guidage des balais 12, 13, 15, 16 du côté des ergots 39, 40, 41, 42 de ces derniers, si l'on se réfère à l'axe 4, c'est-à-dire à l'opposé du stator 2 par rapport aux pièces 25 et 27 si l'on se réfère à cet axe 4.

La came 47 est réalisée en un matériau isolant électrique, et par exemple en une matière thermoplastique, et constitue dans l'exemple de mise en oeuvre illustré une partie d'une pièce 48 elle-même réalisée en une telle matière et présentant la forme générale d'un anneau plat orienté transversalement par rapport à l'axe 4, si l'on se réfère à l'état assemblé du moteur ; outre la came 47, la pièce 48 définit un disque support 49 et deux plaquettes 50 et 51 isolantes vis-à-vis de l'électricité, le disque support 49 d'une part et les plaquettes 50 et 51 d'autre part étant juxtaposés à la came 47 respectivement de part et d'autre de celle-ci en référence à la direction de l'axe 4, dans l'état monté du moteur ; plus précisément, la came 47, de forme plate et d'orientation générale perpendiculaire à l'axe 4 se trouve alors, en référence à cette direction, dans une position correspondant à celle des zones des ergots 39, 40, 41, 42 en saillie hors des glissières 21, 22, 23, 24, alors que le disque support 49, également plat et d'orientation générale perpendiculaire à l'axe 4, se trouve alors au-delà des extrémités de ces ergots dans le sens d'un éloignement par rapport aux glissières 21, 22, 23, 24 à l'opposé du stator 2 suivant la direction de l'axe 4 et ne peut de ce fait interférer avec les ergots, et que les plaquettes 50 et 51 sont placées dans une position moyenne, transversale par rapport à l'axe 4, coïncidant avec la position qu'occupe en référence à la direction de cet axe une zone de tous les balais 12, 13, 15, 16, de façon à pouvoir s'intercaler entre les balais et la face périphérique extérieure 8 du collecteur 7 comme il apparaîtra plus loin.

La pièce 48 et ses différentes parties vont à présent être décrites plus en détail, en référence à la position qu'occupe la pièce 48 à l'état assemblé du moteur.

Vers l'axe 4, la pièce 48 est délimitée par une face périphérique intérieure 52 cylindrique de révolution autour de l'axe 4, et qui est commune aux différentes parties 47, 49, 50, 51 de cette pièce 48 ; le diamètre de la face périphérique intérieure 52 est voisin de celui de la face périphérique extérieure 8 du collecteur 7 mais supérieur à ce diamètre, de telle sorte que la pièce 48 puisse envelopper partiellement, coaxialement, la face périphérique extérieure 8 du collecteur 7 dans les zones de cette face périphérique intérieure 52 correspondant aux plaquettes 50 et 51, sans toutefois qu'il y ait contact mutuel de façon à préserver une indépendance du collecteur 7 et de la pièce 48 notamment à la rotation autour de l'axe 4 vis-à-vis du carter 1.

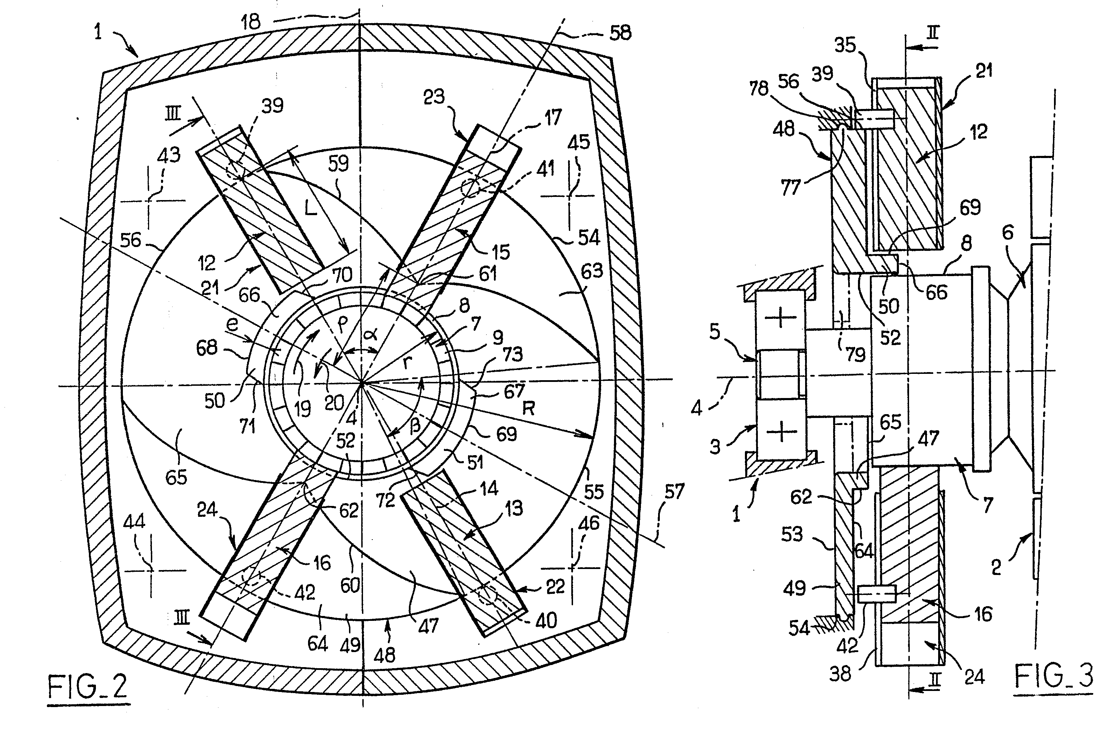

Selon un mode de réalisation préféré de la pièce 48, comme il est illustré en trait mixte à la figure 3, cette pièce définit en outre dans sa zone correspondant au disque support 49 un voile annulaire continu 79, isolant vis-à-vis de l'électricité, présentant une forme de révolution par rapport à l'axe 4 et formant saillie vers celui-ci radialement à partir de la face périphérique intérieure 52 jusqu'à proximité immédiate de l'axe 5 pour s'intercaler entre le collecteur 7 et le palier 3, et définir entre les lames 9 du collecteur et ce palier 3 une chicane augmentant la distance de fuite dans l'air entre eux et permettant par conséquent de les rapprocher en référence à la direction de l'axe 4 tout en respectant les normes imposées quant à cette distance de fuite dans l'air.

Dans sa zone correspondant au disque support 49, la pièce 48 est délimitée, dans le sens d'un éloignement par rapport au stator 2 parallèlement à l'axe 4, par une face annulaire plane 53 perpendiculaire à l'axe 4 ; cette face 53 se raccorde à la face 52 dans le sens d'un rapprochement radial par rapport à l'axe 4, alors que, dans le sens d'un éloignement radial par rapport à celui-ci, elle se raccorde à une face périphérique extérieure 54 cylindrique de révolution autour de l'axe 4 et qui délimite, dans le sens d'un éloignement radial par rapport à l'axe 4, d'une part le disque support 49 sur 360° en référence à l'axe 4, et d'autre part deux zones 55 et 56, symétriques l'une de l'autre si l'on se réfère à l'axe 4, du contour de la came 47 destiné à coopérer avec les ergots 39, 40, 41, 42 des balais 12, 13, 15, 16 de la façon qui apparaîtra plus loin.

Comme le montre la figure 3, dans sa zone correspondant au disque support 49, la face 54 est munie d'une nervure annulaire continue 77, de révolution autour de l'axe 4, sur laquelle s'engage une gorge annulaire continue, complémentaire 78, également de révolution autour de l'axe 4, que présente le carter 1 et qui assure ainsi le guidage de la pièce 48, et par conséquent de la came 47, exclusivement à la rotation autour de l'axe 4 par rapport au carter 1 ; la gorge 78 est avantageusement formée de deux moitiés hémi-circulaires définies respectivement par deux parties du carter 1, et qui se complètent en s'engageant sur la nervure 77 lors de l'assemblage ; selon une variante équivalente, la gorge est définie par la face 54 et la nervure complémentaire portée par le carter 1 ; d'autres modes de liaison entre la came 47 et le carter 1 exclusivement à la rotation relative autour de l'axe 4 peuvent être choisis sans que l'on sorte du cadre de l'invention.

A la figure 2, on a traduit la symétrie des zones 55 et 56 par rapport à l'axe 4 par une symétrie de chacune de ces zones par rapport à un plan 57 incluant l'axe 4 et par une symétrie de chacune de ces zones vis-à-vis de l'autre, par rapport à un deuxième plan 58 perpendiculaire au plan 57 et incluant également l'axe 4, lequel plan 58 inclut l'axe moyen 17 dans la position de la came illustrée à la figure 2.

Entre les zones 55 et 56, le contour de la came 47 est défini par deux zones 59 et 60 reliant les deux précédentes et définies comme elles par des génératrices parallèles à l'axe 4 ; chacune de ces zones 59, 60 est symétrique par rapport au plan 58, et elles sont symétriques l'une de l'autre par rapport au plan 57 ; dans leurs zones respectivement de plus en plus proches du plan 58 par rapport à leur raccordement avec la zone 55 ou 56, elles sont de plus en plus proches de l'axe 4, si bien que, vu dans un quelconque plan de coupe perpendiculaire à l'axe 4, le contour de la came 47 présente la forme d'un 8 présentant deux rétrécissements prononcés 61 et 62 aux intersections respectives des zones 59 et 60 avec le plan 58 ; on remarquera que la distance entre les zones 61 et 62, mesurée dans le plan 58 perpendiculairement à l'axe 4, reste supérieure au diamètre de la face périphérique intérieure 52 de la pièce 48.

Cette distance, de même que les formes et dimensions respectives des zones 55, 56, 59, 60 du contour de la came 47, peuvent être aisément déterminées par l'homme du métier en fonction du diamètre de la face périphérique extérieure 8 du collecteur 7, des cotes des balais 12, 13, 15, 16 et de leurs ergots respectifs 39, 40, 41, 42, 43 selon leur axe moyen respectif 14 ou 17, et selon le décalage angulaire entre les axes 14 et 17.

Si, en se référant à la figure 2, on désigne par R le rayon de la face 54, c'est-à-dire des zones 55 et 56 du contour de la came 47, par r le rayon de la face périphérique extérieure 8 du collecteur 7, par $\rho$ la distance radiale séparant de l'axe 4 les rétrécissements respectifs 61 et 62 des zones 59 et 60 de ce contour, et par L la longueur utile maximale de l'un quelconque des balais 12, 13, 15, 16, mesurée selon l'axe moyen 14 ou 17 de ce balai alors que celui est à l'état neuf, entre l'extrémité de ce balai la plus proche de l'axe 4 et la zone de l'ergot respectif 39, 40, 41, 42 également la plus proche de cet axe, il convient de respecter les relations suivantes :

$$R > \rho > r$$
$$R - L > r$$

En outre, si l'on désigne par $\alpha$ le décalage angulaire entre les axes moyens 14 et 17, mesuré à cheval sur le plan 18, et par $\beta$ le développement angulaire de la zone 55 ou de la zone 56, ramené à l'axe 4, il convient que :

$$\beta > \alpha$$
$$\frac{\beta}{2} > 90° - \alpha$$

$\alpha$ et $\beta$ étant de préférence voisins.

Pour remplir leur rôle qui apparaîtra plus loin, les zones 59 et 60 peuvent présenter différentes formes, que l'homme du métier déterminera aisément sans sortir pour autant du cadre de l'invention ; par exemple, chacune des zones 59 et 60 peut être définie, entre sa jonction avec une zone 55 ou 56 et le rétrécissement correspondant 61 ou 62, par une bande périphérique d'un cylindre à base spirale logarithmique, dont les génératrices sont parallèles à l'axe 4, définie en référence à ce dernier par son rayon polaire de longueur minimale $\rho$, son rayon polaire de longueur maximale R et l'angle $(90° - \frac{\beta}{2})$ séparant ces deux rayons. On peut assimiler ce cylindre à un cylindre de révolution autour d'un axe parallèle à l'axe 4 et décalé par rapport à celui-ci, ladite bande présentant alors un plan moyen perpendiculaire au plan 57 et un rayon voisin du rayon R.

En dehors des zones 55 et 56 communes au disque support 49 et à la came 47, c'est-à-dire dans les zones de la face 54 qui ne se confondent pas avec le contour de la came 47, le disque support 49 est délimité transversalement par rapport à l'axe 4, vers les glissières 21, 22, 23, 24, par deux faces planes, coplanaires, 63 et 64, orientées perpendiculairement à l'axe 4 et joignant la face 54 respectivement à la zone 59 et la zone 60 du contour de la came 47 ; comme il ressort de la figure 3, sur laquelle seule la face 64 est visible, ces faces 63 et 64 sont placées en regard parallèlement à l'axe 4, mais sans contact mutuel, des extrémités respectives des ergots 39, 40, 41, 42 opposées à la zone de solidarisation de ces derniers avec les balais respectifs 12, 13, 15, 16.

La came 47 est également délimitée, vers les glissières 21, 22, 23, 24, par une face plane 65 perpendiculaire à l'axe 4, et dont l'intersection avec les zones 55, 56, 59, 60 définit la périphérie extérieure, cette face 65 étant toutefois placée à proximité immédiate des glissières 21, 22, 23, 24, du même côté de celles-ci que le disque 49 si l'on se réfère à la direction de l'axe 4, de façon à assurer la coïncidence de position, le long de l'axe 4, entre le contour de la came 47 et les ergots 39, 40, 41, 42 évoquée plus haut.

Les plaquettes 50 et 51 se présentent comme des saillies aménagées sur cette face 65 et délimitées dans le sens d'un éloignement par rapport à celle-ci suivant l'axe 4 par des faces planes respectives 66 et 67, coplanaires et perpendiculaires à l'axe 4, et situées, en référence à la direction de ce dernier, entre les limites intérieures des glissières 21, 22, 23, 24 de telle sorte que l'on puisse utiliser les plaquettes 50 et 51 pour entraver le cheminement des balais 12, 13, 15, 16 vers l'axe 4, et vers la face périphérique 8 du collecteur 7, sous l'action des ressorts 31, 32, 33, 34.

Délimitées vers l'axe 4 par la face 52 jointive des faces 66 et 67 à leur niveau et par ailleurs jointives de la face 65, les plaquettes 50 et 51 sont délimitées dans le sens d'un éloignement par rapport à cet axe par des faces respectives 68 et 69 jointives d'une part de la face 65 et d'autre part, respectivement, de la face 66 ou 67, ces faces 68 et 69 étant définies comme des bandes d'une surface cylindrique de révolution autour de l'axe 4 avec un diamètre tel que l'épaisseur e d'une plaquette 50 ou 51, mesurée radialement, en référence à l'axe 4, entre la face 54 et, respectivement, la face 68 ou 69, soit au plus égale à la différence entre le rayon R des zones 55 et 56 du contour de la came 47 et la longueur utile maximale L d'un quelconque balai 12, 13, 15, 16 à l'état neuf.

Chacune des deux plaquettes 50 et 51 est symétrique par rapport au plan 57, et elles sont symétriques l'une de l'autre par rapport au plan 58.

Le développement angulaire des plaquettes 50 et 51, ramené à l'axe 4, est voisin du décalage α entre les axes moyens 14 et 17, et défini par des faces d'extrémité 70 et 71 de la plaquette 50, joignant entre elles les faces 52, 68, 66 et 65, et par des faces d'extrémité 72 et 73 de la plaquette 51, joignant entre elles les faces 52, 69, 67 et 65.

Compte tenu des caractéristiques qui viennent d'être définies, la pièce 48 peut, selon son orientation angulaire par rapport au carter 1, en référence à l'axe 4, mettre en service soit les balais 12 et 13, soit les balais 15 et 16, c'est-à-dire autoriser leur venue en contact avec la face périphérique 8 du collecteur 7, en intercalant entre ceux des balais qui ne sont pas en service et cette face 8 les plaquettes 50 et 51.

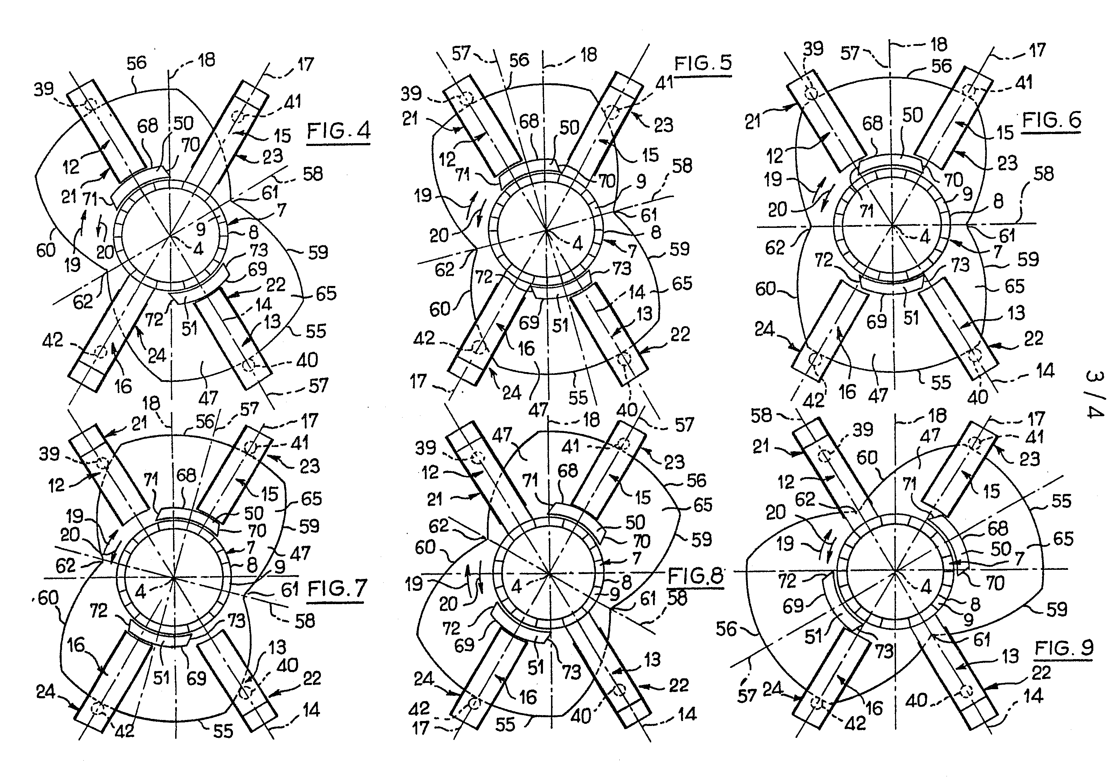

A cet effet, l'utilisateur peut agir sur un doigt 74 solidaire de la pièce 48 et formant une saillie, parallèlement à l'axe 4, sur la face 53 de celle-ci pour sortir du carter 1 via une fente (non représentée) de celui-ci, pour faire évoluer la pièce 48 à la rotation autour de l'axe 4 par rapport au carter 1 entre deux positions limites illustrées respectivement à la figure 2 et à la figure 9.

Il ressortira de la suite de la description que, bien qu'il soit préférable d'ouvrir l'interrupteur 29 avant de procéder à la manoeuvre d'inversion du sens de rotation au moyen de la pièce 48, une manoeuvre de cette dernière alors que l'interrupteur 29 est encore fermé ne risque pas de provoquer d'accident électrique tel qu'un court-circuit.

Une première des positions limites privilégiées de la pièce 48 par rapport au carter 1, en orientation angulaire relative en référence à l'axe 4, est illustré à la figure 2.

Dans cette première position, le plan 58 de la pièce 48 inclut l'axe moyen 17 des balais 15 et 16, dont les ergots 41 et 42 sont ainsi placés en regard respectivement du rétrécissement 61 de la zone 59 de la came 47 et du rétrécissement 62 de la zone 60 de cette came ; alors, que les balais 15 et 16 soient neufs ou qu'ils soient usés à un degré tel qu'ils conservent néanmoins une longueur, mesurée suivant l'axe 17 entre leur extrémité tournée vers l'axe 4 et le collecteur 7 et la zone des ergots respectifs 41 et 42 la plus proche de cet axe 4 ou de ce collecteur 7, au moins égale à la différence entre $\ell$ et r, les deux balais 15 et 16 sont appliqués par leur ressort respectif 33 et 34 contre la face périphérique extérieure 8 du collecteur 7, dont ils relient ainsi les lames de contact 9 respectivement avec le fil connecteur 11 et avec le fil connecteur 10 ; par contre, les ergots 39 et 40 des balais 12 et 13 retiennent ces derniers dans une position éloignée de la face 8 du collecteur 7, dans la mesure où ils entrent en contact respectivement avec la zone 56 et avec la zone 55 du contour de la came 47, qui s'opposent à tout coulissement dans les glissières respectives 21 et 22 vers l'axe 4 et le collecteur 7 ; en outre, la plaquette 50 est intercalée entre le balai 12 et la face périphérique extérieure 8 du collecteur 7, de même que la plaquette 51 entre la face 8 et l'autre balai 13, ce qui assure toute sécurité à l'encontre d'un court-circuit au cas où l'un des ergots 39 et 40, ou ces deux ergots, viendrait à casser ou à se détacher du balai correspondant, qui se trouverait ainsi libéré vis-à-vis d'un coulissement vers le collecteur.

Le rotor 6 du moteur peut alors tourner dans le sens 20 par rapport au stator 2, jusqu'à ce que les balais 15 et 16 présentent une usure telle que leurs ergots respectifs 41 et 42 viennent au contact du rétrécissement 61 et du rétrécissement 62, auquel cas une usure supplémentaire des balais 15 et 16 interrompt leur contact avec la face périphérique 8 du collecteur 7, ce qui évite tout accident consécutif à une usure excessive des balais, c'est-à-dire notamment une possibilité d'entrée des ressorts correspondants 33 et 34 en contact avec les lames 9 du collecteur 7.

Pour provoquer une inversion du sens de rotation du stator 2 par rapport au carter 1, l'utilisateur applique à la pièce 48, par action sur le doigt 74 de celle-ci, une rotation dans le sens 19 par rapport au carter 1.

Dans un premier temps de cette rotation, illustré à la figure 4, les ergots 39 et 40 des balais 12 et 13 restent au contact respectivement de la zone 56 et de la zone 55 du contour de la came 47, ce qui les maintient éloignés de la face 8 du collecteur 7 vis-à-vis de laquelle restent intercalées les plaquettes 50 et 51 ; pendant cette première phase, qui correspond à un déplacement angulaire de la pièce 48 par rapport au carter 1 d'une amplitude variant avec le degré d'usure des balais 15 et 16, cette phase n'existant pas s'ils sont usés au maximum, les ergots 41 et 42 restent dégagés respectivement de la zone 59 et de la zone 60 du contour de la came 47, ce qui conserve la possibilité de rotation du moteur dans le sens 20 par contact des balais 15 et 16 avec les lames 9 du collecteur 7.

Ensuite, dans une phase illustrée à la figure 5, le contact entre les ergots 39 et 40 et, respectivement, les zones 56 et 55 du contour de la came 47 est maintenu, de même que l'intercalation des plaquettes 50 et 51 entre les balais 12 et 13 et la face périphérique extérieure du collecteur 7, mais les ergots 41 et 42 des balais 15 et 16 entrent au contact respectivement de la zone 59 et de la zone 60 du contour de la came 47, la poursuite de la rotation de la pièce 48 dans le sens 19 par rapport au carter 1 se traduisant alors par l'application aux ergots 41 et 42 d'une poussée centrifuge, écartant les balais 15 et 16 vis-à-vis de la face périphérique extérieure 8 du collecteur 7.

A la fin de cette phase, illustrée à la figure 6, les plans 57 et 18 coïncident, les ergots 39 et 41 sont au contact de la zone 56 du contour de la came 47, alors que les ergots 40 et 42 sont au contact de la zone 55 de ce contour, et l'on remarque que la plaquette 50 est intercalée entre la face périphérique extérieure 8 du collecteur 7 et les balais 12 et 15, alors que la plaquette 51 est intercalée entre cette face 8 et les balais 13 et 16 ; en d'autres termes, les plaquettes 50 et 51 commencent à s'intercaler entre les balais 15 et 16 et le collecteur 7 avant de dégager l'accès des balais 12 et 13 à ce dernier.

Le mouvement de rotation de la pièce 48 dans le sens 19 par rapport au carter 1 se poursuivant, les ergots 41 et 42 restent au contact respectivement de la zone 56 et de la zone 55 du contour de la came 47, ce qui maintient les balais correspondants 15 et 16 éloignés de la face périphérique extérieure 8 du collecteur 7 dont ils sont isolés respectivement par la plaquette 50 et par la plaquette 51, mais les ergots 39 et 40 des balais 12 et 13 viennent au contact respectivement de la zone 60 et de la zone 50 du contour de la came 47, c'est-à-dire avec des zones du contour de cette came respectivement de plus en plus proches de l'axe 4, alors que les plaquettes 50 et 51 libèrent le passage, vers le collecteur 7, pour ces balais 12 et 13 ; alors, sous l'action des ressorts respectifs 31 et 32, les balais 12 et 13 coulissent radialement, dans le sens d'un rapprochement vis-à-vis de l'axe 4, dans les glissières respectives 21 et 22 ; cette phase est illustrée à la figure 7.

A la fin de cette phase, la rotation de la pièce 48 se poursuivant dans le même sens par rapport au carter 1, le contact s'interrompt entre les ergots 39 et 40 et le contour de la came 47, ce qui libère totalement les balais correspondants 12 et 13 dans le sens d'un appui sur les lames 9 du collecteur 7, alors que l'écartement des balais 15 et 16 vis-à-vis de ce dernier est maintenu par contact des ergots 41 et 42 avec les zones 56 et 55 du contour de la came, avec intercalation des plaquettes 50 et 51 entre le collecteur 7 et, respectivement, les balais 15 et 16 ; cette phase est illustrée à la figure 8.

Lorsque, au cours de ce mouvement, le plan 58 inclut l'axe moyen 14 des balais 12 et 13, les ergots 39 et 40 sont placés en regard des évidements 62 et 61, respectivement, ce qui autorise le rotation du rotor 6 par rapport au stator 2 dans le sens 19 jusqu'à ce que les balais 12 et 13 atteignent le degré d'usure maximal décrit plus haut à propos des balais 15 et 16 ; ces derniers restent quant à eux écartés du collecteur 7, et isolés de celui-ci par les plaquettes 50 et 51 ; cet état est illustré à la figure 9 et correspond à une alimentation des lames 9 du collecteur 7 par le fil connecteur 11 via le balai 13 et par le connecteur 10 via le balai 12.

Une nouvelle inversion de sens de rotation du rotor 6 par rapport au stator 2 peut être obtenue par une nouvelle action manuelle sur le doigt 74 à la rotation vis-à-vis du carter 1, cette fois en sens inverse du sens précédent, ce qui offre l'avantage de permettre d'associer facilement à la position et au mouvement du doigt 74 par rapport au carter 1 une indication précise de la mise en service de la paire de balais correspondant à la rotation du rotor 6 dans un sens ou dans l'autre par rapport au stator 2, et de permettre d'associer au carter 1 des butées limitant le déplacement du doigt 74, et lui imposant des positions limites correspondant aux états illustrés respectivement aux figures 2 et 9.

Conformément à cette solution, l'action sur la pièce 48 à la rotation dans le sens 20 par rapport au carter 1, pour revenir à l'état illustré à la figure 2 correspondant à la rotation du rotor 6 par rapport au stator 2 précisément dans ce sens 20, enchaîne successivement les étapes décrites en référence aux figures 8, 7, 6, 5, 4 respectivement.

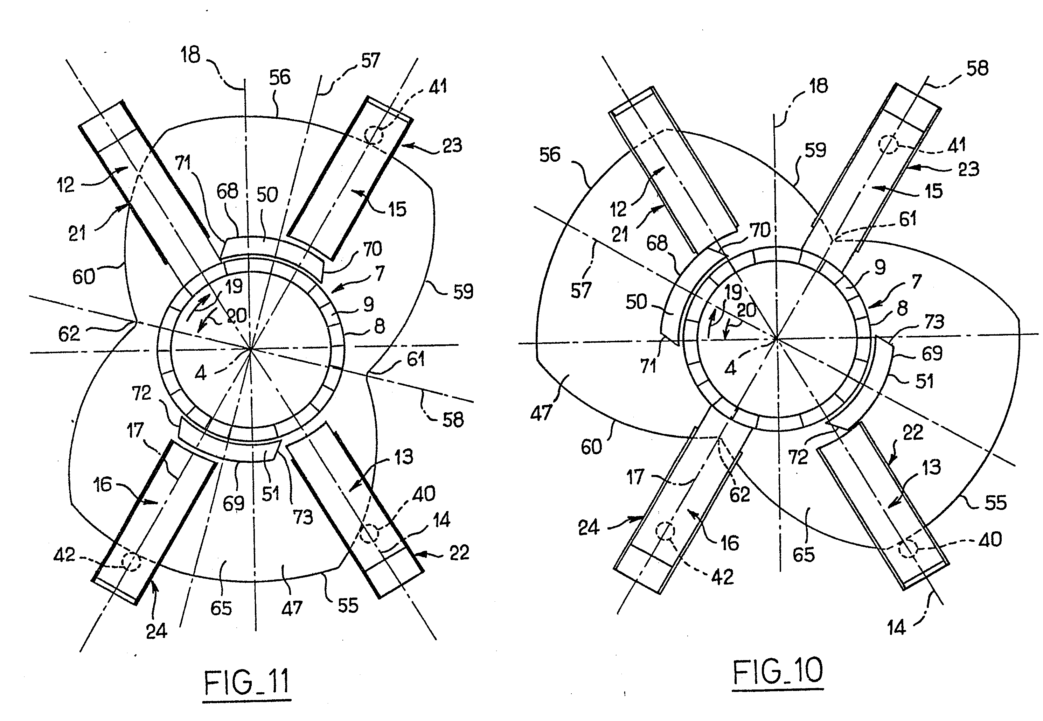

Les figures 10 et 11 montrent comment sont limitées, du fait des plaquettes 50 et 51, les possibilités de telles inversions du sens de rotation du rotor par rapport au stator si l'ergot de l'un des balais, et par exemple l'ergot 39 du balai 12, vient à casser ou à se détacher, que ce balai soit en service ou non ; on comprendra qu'une même sécurité est obtenue de la même manière quel que soit l'ergot ou les ergots qui viennent ainsi à casser ou à se détacher.

A supposer que l'ergot 39 du balai 12 vienne à se détacher alors que le moteur se trouve dans l'état illustré à la figure 2, on rencontre la situation illustrée à la figure 10 dans laquelle, en dépit de cette rupture, le balai 12 reste isolé vis-à-vis de la face périphérique extérieure 8 du collecteur 7 par la plaquette 50, contre laquelle son ressort 31 l'amène en butée ; les autres balais 13, 15, 16 restent dans les états décrits en référence à la figure 2.

Si l'utilisateur désire alors inverser le sens de rotation du rotor 6 par rapport au stator 2, il peut parcourir sans difficulté les étapes successives décrites en référence aux figures 4 à 9 en faisant tourner la pièce 48 dans le sens 19 par rapport au carter 1 ; dès que, lors de cette rotation, la plaquette 50 libère le passage vers le collecteur 7 pour le balai 12, c'est-à-dire dans une étape intermédiaire entre celle des figures 6 et 7, le balai 12 qui n'est pas retenu par la came 47 coulisse dans la glissière 21 sous l'action du ressort 31, et vient au contact du collecteur ; ceci ne présente pas d'inconvénient dans la mesure où les balais 15 et 16 sont alors déjà isolés vis-à-vis de ce dernier ; le mouvement se poursuivant, le balai 13 vient également au contact du collecteur, toutefois dans les conditions normales décrites en référence aux figures 4 à 9, et le fonctionnement du moteur peut avoir lieu dans les conditions normales, le rotor 6 tournant par rapport au stator 2 dans le sens 19 associé à l'utilisation des balais 12 et 13.

Si, toutefois, l'utilisateur veut à nouveau inverser le sens de rotation du rotor par rapport au stator, et tente par conséquent d'animer la pièce 48 d'un mouvement de rotation dans le sens 20 par rapport au carter 1, le balai 13 s'escamote dans les conditions normales mais, dans la mesure où le balai 12 ne s'escamote quant à lui pas, la plaquette 50 vient buter contre lui par sa face 71, comme le montre la figure 11, avant que les balais 15 et 16 puissent amorcer un mouvement de rapprochement vis-à-vis du collecteur, d'une part du fait que leurs ergots respectifs 41 et 42 sont en contact avec les zones 56 et 55 du contour de la came 47, et d'autre part du fait qu'entre le collecteur et eux sont intercalées les plaquettes 50 et 51, respectivement ; on évite ainsi toute possibilité de court-circuit au collecteur.

On notera que l'on se trouverait devant la même impossibilité si la rupture de l'ergot 39 du balai 12 était intervenue alors que le moteur se trouvait dans l'état illustré à la figure 9, apte à une rotation du rotor 6 par rapport au stator 2 dans le sens 19 associé aux balais 12 et 13.

Le choix de telles dispositions permet non seulement de bénéficier d'une bonne sécurité électrique, mais également d'être averti de la rupture de l'ergot d'un balai par l'impossibilité d'imprimer au doigt 74 un mouvement d'inversion de sens de rotation du rotor par rapport au stator.

On notera que le mode d'inversion du sens de rotation d'un moteur résultant du montage des balais qui vient d'être décrit n'impose aucun couplage avec l'interrupteur 29 d'alimentation en électricité du moteur puisqu'à chacune des deux paires de balais est lié un sens de rotation propre du rotor par rapport au stator, et qu'en aucune façon les deux paires de balais ne peuvent être mises en contact simultanément avec les lames 9 du collecteur 7.

Cependant, d'autres modes de mise en oeuvre pourraient être choisis sans que l'on sorte pour autant du cadre de la présente invention.

## REVENDICATIONS

1. Moteur électrique du type dit "universel" à courant alternatif ou du type à courant continu, comportant un stator (2) et un rotor (6) apte à tourner par rapport au stator (2) autour d'un axe déterminé (4), dans un sens (19) ou dans l'autre (20) en fonction d'un choix dans le mode d'alimentation du moteur en électricité, le rotor (6) portant de façon solidaire un collecteur électrique (7) présentant une périphérie extérieure (8) cylindrique de révolution autour de l'axe (4) et le stator (2) portant des balais (12, 13, 15, 16) occupant une même position moyenne diamétrale (14, 17), angulairement fixe par rapport au stator (2), respectivement de part et d'autre du collecteur (7), caractérisé en ce que le stator (2) porte deux paires de balais (12, 13, 15, 16), en ce que les positions moyennes diamétrales respectives (14, 17) des deux paires sont fixes par rapport au stator (2), optimisées en fonction de l'un respectif desdits sens de rotation (19, 20), et décalées angulairement, et en ce qu'il est prévu des moyens sélectifs (39, 40, 41, 42, 47) d'application radiale des balais de l'une ou l'autre paire, exclusivement, contre la périphérie extérieure (8) du collecteur (7) en fonction dudit choix.

2. Moteur électrique selon la revendication 1, caractérisé en ce que les positions moyennes diamétrales respectives (14, 17) des deux paires de balais (12, 13, 15, 16) sont symétriques l'une de l'autre par rapport à un plan axial (18) correspondant au neutre mécanique du stator (2).

3. Moteur électrique selon la revendication 2, caractérisé en ce que le décalage angulaire des positions moyennes diamétrales respectives (14, 17) des deux paires de balais (12, 13, 15, 16) est de 60° environ, également réparti de part et d'autre dudit plan axial (18).

4. Moteur selon l'une quelconque des revendications 1 à 3, caractérisé en ce que le stator (2) porte des moyens (21, 22, 23, 24) de guidage au déplacement radial respectivement de part et d'autre du collecteur (7) dans chacune desdites positions moyennes diamétrales (14, 17), pour les balais (12, 13, 15, 16) de la paire de balais correspondante, en ce qu'il est prévu des moyens (31, 32, 33, 34) de sollicitation élastique de chaque balai (12, 13, 15, 16) dans le sens d'un déplacement radial vers le collecteur (7), et en ce que les moyens sélectifs (39, 40, 41, 42, 47) d'application radiale des balais (12, 13, 15, 16) de l'une ou l'autre paire contre la périphérie extérieure (8) du collecteur (7) comportent :

- d'une part un ergot respectif (39, 40, 41, 42) solidaire de chaque balai (12, 13, 15, 16) et orienté parallèlement à l'axe (4),

- d'autre part sur le stator (2) une came (47) guidée à la rotation par rapport à lui autour de l'axe (4), et juxtaposée aux balais (12, 13, 15, 16), suivant l'axe (4), du côté des ergots (39, 40, 41, 42) de ces derniers, la came (47) présentant un contour extérieur (55, 56, 59, 60) symétrique par rapport à l'axe (4) et dont la forme dans un plan perpendiculaire à ce dernier approche celle d'un 8, définie par deux rétrécissements (61, 62) diamétralement opposés et deux élargissements (55, 56) diamétralement opposés de ce contour, disposés et dimensionnés de telle sorte que lorsque les élargissements (55, 56) sont placés selon l'une desdites positions moyennes diamétrales (14, 17), ils agissent sur les ergots (39, 40, 41, 42) des balais (12, 13, 15, 16) de la paire de balais correspondante (12, 13, 15, 16) dans le sens d'un écartement de ces derniers vis-à-vis de la périphérie extérieure (8) du collecteur (7), et que les rétrécissements (61, 62) soient alors placés selon l'autre desdites positions moyennes diamétrales (14, 17) et libèrent les ergots (39, 40, 41, 42) des balais (12, 13, 15, 16) de la paire de balais correspondante dans le sens d'un contact de ces derniers vis-à-vis de la périphérie extérieure (8) du collecteur (7).

5. Moteur électrique selon la revendication 4, caractérisé en ce que lesdits moyens (21, 22, 23, 24) de guidage au déplacement radial comportent des glissières radiales (21, 22, 23, 24) fixes par rapport au stator (2) et le long desquelles les balais correspondants (12, 13, 15, 16) sont montés au coulissement.

6. Moteur électrique selon l'une quelconque des revendications 4 et 5, caractérisé en ce que les deux élargissements (55, 56) sont définis par deux zones d'une surface cylindrique de révolution autour de l'axe (4) et sont reliés aux rétrécissements (61, 62) par des zones de cylindres à base logarithmique définie en référence à l'axe (4) et de génératrices parallèles à ce dernier.

7. Moteur électrique selon l'une quelconque des revendications 1 à 6, caractérisé en ce qu'il est en outre prévu des moyens (48), couplés auxdits moyens sélectifs (39, 40, 41, 42, 47) d'application radiale des balais de l'une ou l'autre paire contre la périphérie extérieure (8) du collecteur (7), pour intercaler deux plaquettes isolantes (50, 51) entre cette périphérie extérieure (8) et, respectivement, les deux balais (12, 13, 15, 16) qui ne sont pas appliqués contre celle-ci par lesdits moyens sélectifs (39, 40, 41, 42, 47) d'application radiale.

8. Moteur électrique selon la revendication 7 en combinaison avec l'une quelconque des revendications 4 à 6, caractérisé en ce que les deux plaquettes isolantes (50, 51) sont portées de façon solidaire par la came (47) et forment une saillie par rapport à celle-ci, parallèlement à l'axe (4), du côté des balais (12, 13, 15, 16), dans des zones de la came (47) correspondant aux élargissements (55, 56) du contour de celle-ci.

9. Moteur électrique selon la revendication 8, caractérisé en ce que la came (47) et les plaquettes (50, 51) sont réalisées en une seule pièce (48) d'une matière isolante, telle qu'une matière plastique.

10. Moteur électrique selon la revendication 9, caractérisé en ce que ladite pièce (48) d'une matière isolante définit en outre un voile annulaire continu (79) intercalé entre le collecteur (7) et un palier (3) de guidage du rotor (6) à la rotation autour de l'axe (4) par rapport au stator (2).

11. Moteur électrique selon l'une quelconque des revendications 7 à 10, caractérisé en ce que les plaquettes (50, 51) sont dimensionnées et couplées aux moyens sélectifs (39, 40, 41, 42, 47) d'application radiale des balais (12, 13, 15, 16) de l'une ou l'autre paire contre la périphérie extérieure (8) du collecteur (7), de telle sorte que lors du passage d'un premier au deuxième desdits sens de rotation (19, 20), elles s'intercalent entre la périphérie extérieure (8) du collecteur (7) et les balais (12, 13) de la paire correspondant au premier sens (19), quittant le contact avec ladite périphérie (8), avant d'avoir totalement dégagé celle-ci en regard des balais (15, 16) de l'autre paire, sur le point d'entrer en contact avec cette périphérie (8).

FIG_1

0125961

FIG_2

FIG_3

0125961

0125961

3 / 4

FIG. 6 · FIG. 9 · FIG. 5 · FIG.8 · FIG. 4 · FIG.7

FIG_11

FIG_10

4 / 4

0125961

**0125961**
Numéro de la demande

**Office européen
des brevets**

**RAPPORT DE RECHERCHE EUROPEENNE**

EP 84 40 0794

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| E | NL-A-8 105 109 (SKILL)<br><br>* Page 1, ligne 1 - page 2, ligne 35; figures 1-4 *<br><br>--- | 1,2,4-6 | H 02 K 23/18 |
| A | DE-C- 404 642 (BOSSU)<br><br>--- | | |
| A,D | US-A-3 440 465 (PRATT)<br><br>--- | | |
| A,D | US-A-2 764 705 (ALBERTSON)<br><br>----- | | |

| DOMAINES TECHNIQUES RECHERCHES (Int. Cl. ³) |
|---|
| H 01 R 39/00<br>H 02 K 23/00 |

Le présent rapport de recherche a été établi pour toutes les revendications

| Lieu de la recherche | Date d'achèvement de la recherche | Examinateur |
|---|---|---|
| LA HAYE | 08-08-1984 | TIELEMANS H.L.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant